# EUROPEAN PATENT SPECIFICATION

(11) **EP 4 634 712 B1**
(45) Date of publication and mention of the grant of the patent: **16.09.2026**
(21) Application number: 24845001.7
(22) Date of filing: 23.07.2024
(51) Int. Cl.: G02B 6/10, G02B 6/42, G02B 27/01, G02B 27/00

(54) **OPTICAL SYSTEM WITH DUAL REFLECTOR COUPLING-IN TO LIGHTGUIDE**
OPTISCHES SYSTEM MIT ZWEI REFLEKTOREN ZUR EINKOPPLUNG IN EINEN LICHTLEITER
SYSTÈME OPTIQUE À COUPLAGE À DOUBLE RÉFLECTEUR À GUIDE DE LUMIÈRE

(30) Priority: 23.07.2023 US 202363528386 P; 28.08.2023 US 202363534871 P
(43) Date of publication of application: 22.10.2025
(73) Proprietor: Lumus Ltd., 7403631 Ness Ziona (IL)
(72) Inventor: CHRIKI, Ronen, 7140903 Lod (IL); RONEN, Eitan, Rechovot (IL)
(74) Representative: Kancelaria Eupatent.pl Sp. z o.o.
(86) International application number: PCT/IL2024/050720
(87) International publication number: WO 2025/022385

(56) References cited:
- US-A1- 2015 362 735
- US-A1- 2021 227 187
- US-A1- 2022 043 272
- US-B2- 10 976 556

## Description

### FIELD AND BACKGROUND OF THE INVENTION

The present invention relates to optical systems and, in particular, it concerns an optical system in which a dual reflector arrangement is used to couple an image into a lightguide optical element.

Lightguide-based displays employ a lightguide, typically in the form of a slab having mutually parallel front and rear surfaces, to guide an image in front of the eye of the user for coupling out towards the eye for viewing. In some cases, the lightguide may achieve one- or two-dimensional optical aperture expansion by progressively redirecting the light within the lightguide and/or in the coupling out process. Progressive redirection of the light is typically performed either by a set of embedded partial reflectors or by diffractive optical elements.

Coupling an image into the lightguide presents design challenges. Optimal image uniformity is achieved when the image light "fills" the lightguide thickness, i.e., where all rays of the image and its reflection are present at every point within the lightguide thickness. This often requires a relatively large projector and coupling configuration and dictates geometrical layouts which may be at odds with ergonomic and aesthetic design considerations.

### SUMMARY OF THE INVENTION

The present invention is an optical system in which a dual reflector arrangement is used to couple an image into a lightguide optical element.

According to the teachings of an embodiment of the present invention there is provided, an optical system comprising: (a) a lightguide having first and second mutually parallel major surfaces for supporting propagation of image light by internal reflection at the major surfaces, the major surfaces being separated by a thickness of the lightguide, the lightguide including a coupling-out arrangement for coupling out image light from the lightguide towards an eye of an observer; (b) an image projector for projecting light corresponding to a collimated image through a projector exit aperture; and (c) a coupling-in configuration deployed to couple in the light from the image projector so as to propagate within the lightguide, the coupling-in configuration comprising: (i) a first planar reflector forming an acute angle β with the major surfaces and extending across the thickness of the lightguide, and (ii) a second planar reflector associated with the first major surface external to the lightguide and inclined to the first major surface at an angle 2β such that a plane of the second planar reflector corresponds to the first major surface under reflection in a plane of the first planar reflector, wherein the image projector is aligned with the coupling-in configuration such that, for each pixel of the collimated image, light rays corresponding to that pixel passing through a first part of the projector exit aperture impinge directly on the first planar reflector and are reflected to impinge on the first major surface at a first angle of incidence and light rays corresponding to that pixel passing through a second part of the projector exit aperture impinge on the second planar reflector, are reflected towards the first planar reflector and are reflected from the first planar reflector to impinge on the second major surface at the first angle of incidence.

According to a further feature of an embodiment of the present invention, the second planar reflector is formed at a surface of a prism attached to the first major surface.

According to a further feature of an embodiment of the present invention, the lightguide is formed primarily from a material having a first refractive index and wherein the prism is formed from a material having a second refractive index.

According to a further feature of an embodiment of the present invention, there is also provided a compensation wedge formed from material with the first refractive index interposed between the prism and the first major surface.

According to a further feature of an embodiment of the present invention, a portion of the lightguide adjacent to the first planar reflector is formed from a material having the second refractive index, the second refractive index being greater than the first refractive index.

According to a further feature of an embodiment of the present invention, the image projector is integrated with the prism, the image projector comprising a polarizing beam splitter deployed within the prism for directing light from an image plane via reflective collimating optics towards the first and second planar reflectors.

According to a further feature of an embodiment of the present invention, the reflective collimating optics is located behind the second planar reflector and wherein light from the image plane passes through the second planar reflector to reach the reflective collimating optics, is reflected back through the second planar reflector, and is reflected by the polarizing beam splitter at an oblique angle to the second planar reflector for coupling into the lightguide.

According to a further feature of an embodiment of the present invention, the angle β is between 35 degrees and 55 degrees.

According to a further feature of an embodiment of the present invention, the second planar reflector is perpendicular to the first major surface of the lightguide.

### BRIEF DESCRIPTION OF THE DRAWINGS

The invention is herein described, by way of example only, with reference to the accompanying drawings, wherein:
FIGS. 1A and 1B are schematic isometric views of optical systems, constructed and operative according to embodiments of the present invention, implemented as binocular near-eye displays with one-dimensional and two-dimensional aperture expansion of a projected image within a lightguide, respectively;
FIGS. 2A and 2B are schematic side views illustrating coupling-in of an image into a lightguide with reflective and diffractive coupling out, respectively;
FIGS. 3A-3C are partial schematic side views similar to FIG. 2A illustrating ray paths for a chief ray of an image, a shallowest angle ray and a steepest angle ray, respectively;
FIG. 3D is a view similar to FIGS. 3A-3C illustrating the size parameters of a coupling-in prism required to accommodate both the shallowest and ray and the steepest angle ray, and to fill the lightguide;
FIGS. 4A and 4B are schematic top and side illustrations, respectfully, showing directions of inclination of a glasses frame lightguide relative to a viewing direction of a user;
FIGS. 5A-5C are schematic side views illustrating a coupling-in arrangement from the optical systems of FIGS. 1A and 1B showing ray paths for chief rays of an image originating at a first part of a projector exit aperture, a second part of the projector exit aperture, and the entirety of the projector exit aperture, respectively;
FIGS. 6A and 6B are schematic side views similar to FIGS. 5A-5C illustrating ray paths for a shallowest angle ray and a steepest angle ray or an image, respectively;
FIG. 6C is a view similar to FIGS. 6A and 6B illustrating the size parameters of a coupling-in prism required to accommodate both the shallowest and ray and the steepest angle ray, and to fill the lightguide;
FIG. 7 is a view similar to FIGS. 5A-5C illustrating a possible ray path for generating a ghost image in certain implementations of the optical system;
FIG. 8 is a schematic side view similar to FIG. 7 illustrating a modification of the coupling-in configuration to eliminate the ghost ray path of FIG. 7;
FIG. 9A is a view similar to FIGS. 5A-5C illustrating another possible ray path for generating a ghost image in certain implementations of the optical system;
FIG. 9B is a schematic side view similar to FIG. 9A illustrating a modification of the coupling-in configuration to eliminate the ghost ray path of FIG. 9A;
FIGS. 10A and 10B are schematic side views similar to FIGS. 5A-5C illustrating an option of providing a high refractive index section of the lightguide adjacent to a coupling-in region, without and with a compensation wedge prism, respectively;
FIG. 11 is a schematic side view similar to FIGS. 5A-5C illustrating a first option for integrating an image projector with a coupling prism for coupling an image into the lightguide; and
FIG. 12 is a schematic side view similar to FIGS. 5A-5C illustrating a second option for integrating an image projector with a coupling prism for coupling an image into the lightguide.

### DESCRIPTION OF THE PREFERRED EMBODIMENTS

The present invention is an optical system in which a dual reflector arrangement is used to couple an image into a lightguide optical element.

The principles and operation of optical systems according to the present invention may be better understood with reference to the drawings and the accompanying description.

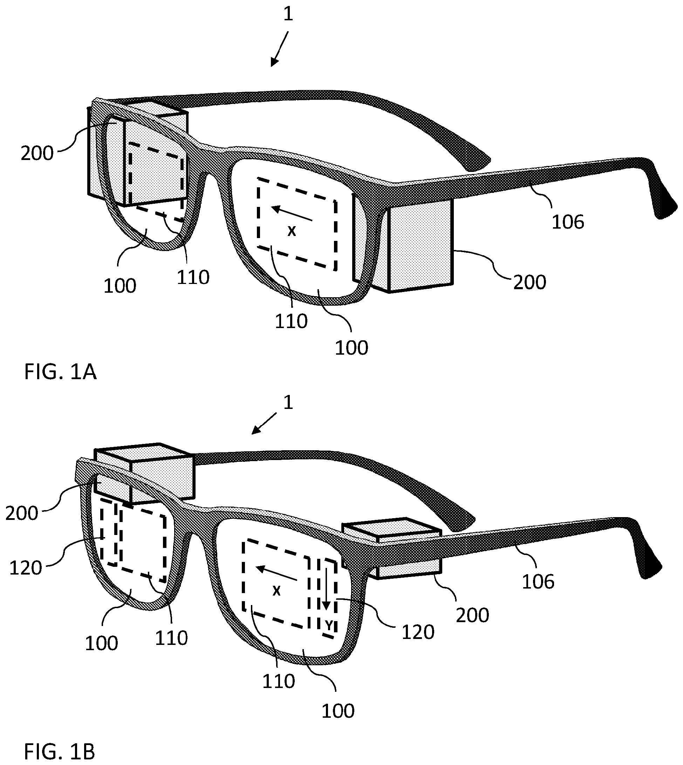

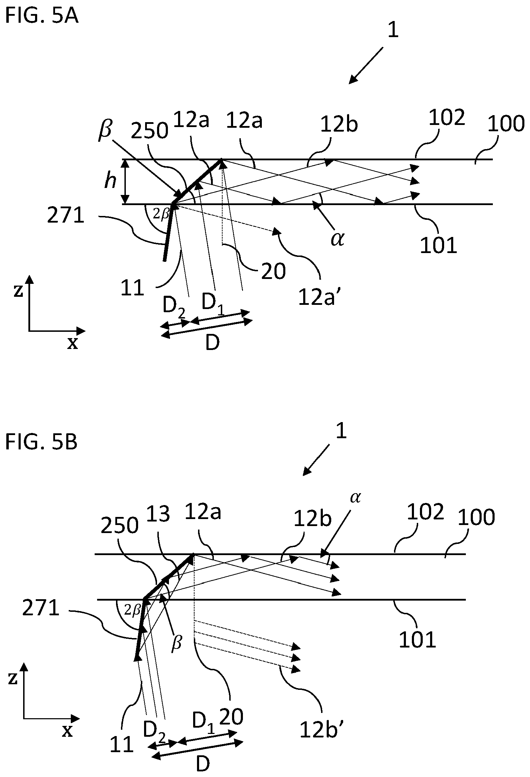

By way of introduction, FIGS. 1A-4B present a typical usage scenario of the present invention, illustrate some of the conventional approaches to coupling-in configurations for such applications, and define various terminology and parameters that are used to explain features of the present invention. Details of various preferred implementations of the present invention are then presented with reference to FIGS. 5A-11.

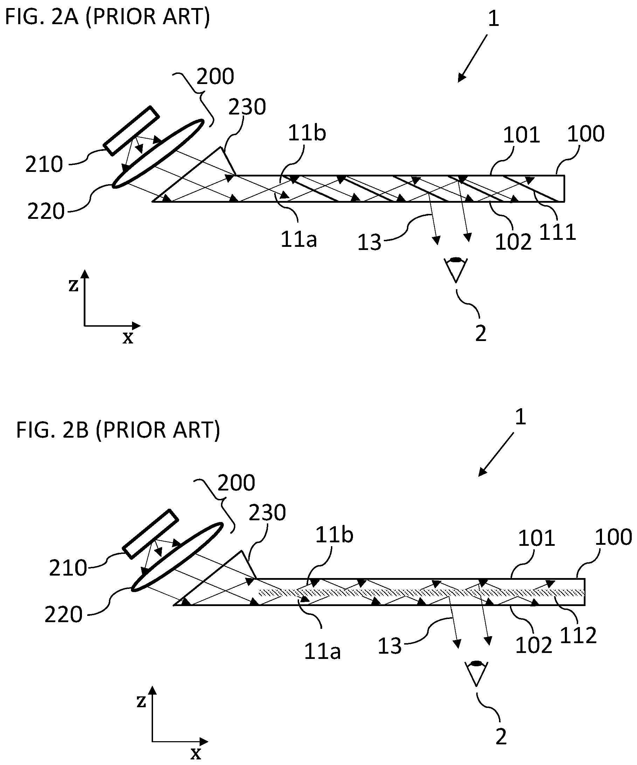

FIGS. 1A and 1B are schematic isometric views of a head mounted display **1.** An image is projected by a projector **200** and coupled into the lightguide optical element (LOE) **100,** interchangeably referred to as a "waveguide" or "substrate," which are supported by a support structure, here shown in the form of a glasses frame **106.** The waveguide is usually composed of an optical substrate that has two parallel major surfaces. Light corresponding to a projected image that is coupled into waveguide **100** is trapped by total internal reflection (TIR). Due to the TIR, the image in Fig. 1A propagates mostly in the x-axis direction. Waveguide **100** includes embedded elements that progressively couple the light out of the cavity towards the eye of the observer, thereby achieving optical aperture expansion in the x-direction. These elements lie in region **110** and may be partially reflecting surfaces (or "facets") **111** embedded inside the substrate as illustrated in FIG. 2A, or volume or surface gratings **112** as illustrated in FIG. 2B. The examples in the subsequent disclosure refer primarily to implementations with partially reflecting surfaces, but the teachings of the present invention apply throughout equally to waveguides with diffractive elements, or a combination of diffraction and reflective elements.

The waveguide **100** may include more than one set of co-parallel elements, as presented in Fig. 1B, where embedded elements in a first region **120** progressively redirect the image light within the substrate, thereby expanding the effective optical aperture approximately in the y-axis direction, while embedded elements in the second region **110** expand light approximately in the x-axis direction. Here too, the two-dimensional aperture expansion may employ reflective elements, diffractive elements, or some combination of the two.

FIGS. 2A-3D illustrate conventional geometry for coupling light corresponding to an image into the waveguide, shown in one-dimensional expansion scenario but applicable also to two-dimensional aperture expansion scenarios. In FIGS. 2A and 2B, an image from a display **210** is collimated by a lens **220,** and is coupled into the waveguide **100** through a coupling-in prism **230.** The ascending rays **11b** and descending rays **11a** describe the image and conjugated (inverted) image between which energy is interchanged as they propagate through the waveguide, and that are trapped by TIR between the major surfaces of the waveguide, **101** and **102.** When the rays **11b** are reflected by one of the embedded partially reflecting surfaces **111** in FIG. 2A or diffractive optical element **112** in FIG. 2B, they are redirected to rays **13** which are no longer trapped by TIR and are therefore coupled out of the waveguide towards the "eye motion box" (EMB), corresponding to the region from which the user's eye **2** views the image.

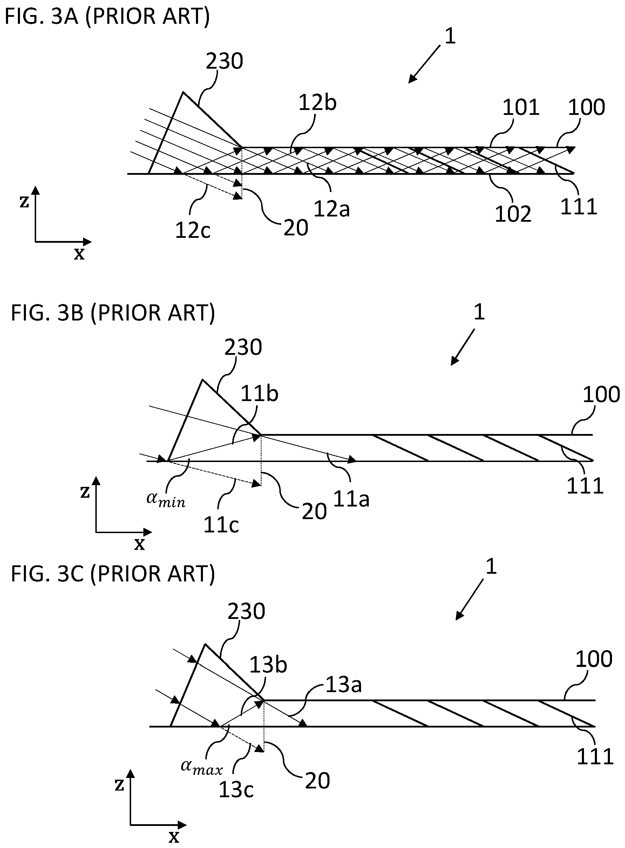

An image coupled into the waveguide is composed of different fields (different pixels which arrive at different locations on the retina of the user), that can each be described by a set of parallel rays. FIG. 3A shows descending and ascending rays **12a** and **12b,** that describe the central field. In order to achieve a uniform image at the output, the effective aperture **20** must be filled. The size of the effective aperture **20** in a direction normal to the waveguide (z-axis in FIG. 3A) is double the thickness of the waveguide, defined between the cutoff edge at the end of prism **230** and the mirror image of that edge in lower waveguide surface **102.** Typically, prism **230** is constructed such that the light-entry surface is normal to the central field, thereby minimizing dispersion artifacts.

FIGS. 3B and 3C show the two extreme field locations that propagate through the waveguide system 1 at angles *αₘᵢₙ* and *αₘₐₓ* , with respect to the waveguide major surfaces. In FIG.3B, rays propagate at the lowest angle with respect to the major surface, *αₘᵢₙ*, in descending and ascending rays **11a** and **11b,** and in FIG. 3C, light propagates at the highest angle with respect to the major surfaces of the waveguide, *αₘₐₓ* in descending and ascending rays, **13a** and **13b.** The field of view (FoV) guided by the waveguide in the x-z plane is given by $FoV = {α}_{max} - {α}_{min} .$

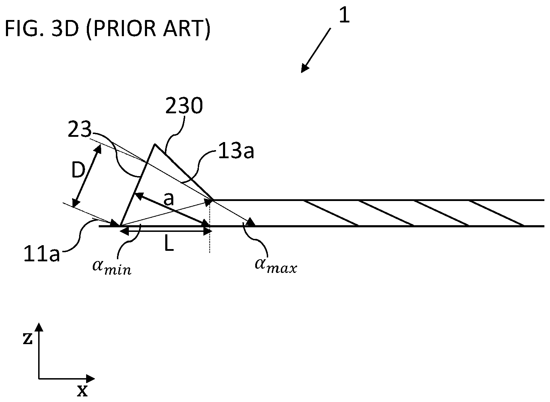

Considering the input structure in these figures, one can estimate the size of the required projector as illustrated in FIG. 3D based on: (a) the size *D*, defined as the region on the back (light entrance) surface of prism **230** where light rays impinge the surface in order to reach the aperture **20** at the required field of view; and (b) the distance *a* between the center of the input aperture **20** and the back surface of the prism **230.** For a waveguide of thickness *h*, these size parameters are given by $a = \frac{h cos \left[\frac{\left({α}_{min}+{α}_{max}\right)}{2}\right]}{tan \left({α}_{min}\right)} ,$ $D = \frac{h sin \left({α}_{min}+{α}_{max}\right)}{sin \left({α}_{min}\right) cos \left[\frac{\left({α}_{max}-{α}_{min}\right)}{2}\right]} .$

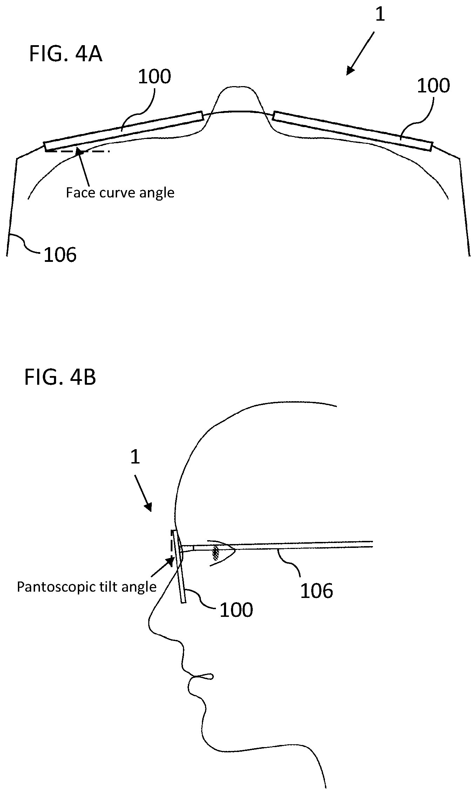

These parameters diverge for small values of *αₘᵢₙ* ,and accordingly the size of the projector in waveguides with small *αₘᵢₙ* becomes large. Since the orientation of the projector in FIGS.2A-3D is dictated by the geometric parameters of the waveguide, this can lead to cumbersome systems, especially when *αₘᵢₙ* is small. It is therefore advantageous to design an input coupling arrangement that provides additional flexibility regarding the orientation of the projector. Furthermore, the waveguide is often tilted for aesthetic or other reasons, as illustrated in FIGS. 4A and 4B, and it is often desired to position and orientate the image projector so that it can be conveniently and compactly incorporated in frame **106.** US 10 976 556 B2 discloses a coupling-out arrangement comprising two planar reflectors, a first of them extending across a thickness of a lightguide and the other associated with a major surface of the lightguide at an angle so as to reflect light that has been reflected by the first reflector towards an eye of an observer.

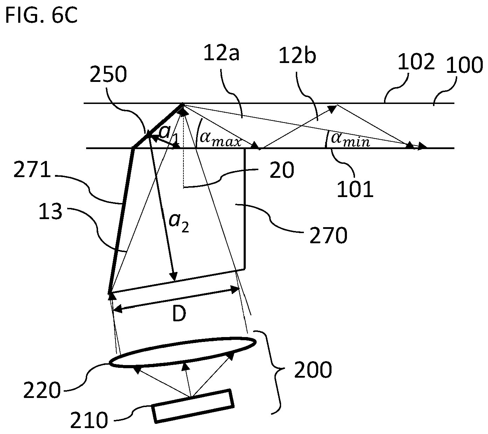

In the above context, certain embodiments of the present invention as presented in FIGS. 5A-11 provide optical system **1,** which is typically a display system such as illustrated in FIGS. 1A and 1B, including a lightguide **100** having first and second mutually parallel major surfaces **101, 102** for supporting propagation of image light **12a, 12b** by internal reflection at the major surfaces. Major surfaces **101, 102** are separated by a thickness ***h*** of the lightguide. The lightguide also includes a coupling-out arrangement, such as those illustrated in FIGS. 2A or 2B above, for coupling out image light from the lightguide towards the eye of an observer. The optical system also includes an image projector for projecting light corresponding to a collimated image through a projector exit aperture **D.** The projector is represented schematically in FIG. 6C as an image source **210** and collimating optics **220.**

It is a particular feature of certain preferred embodiments of the present invention that optical system **1** further includes a coupling-in configuration, deployed to couple in the light from the image projector so as to propagate within the lightguide, that includes a first planar reflector **250** forming an acute angle β with the major surfaces and extending across the thickness of lightguide **100,** and a second planar reflector **271.** Second planar reflector **271** is associated with first major surface **101** external to lightguide **100** and inclined to first major surface **101** at an angle 2β. Thus, a plane of second planar reflector **271** corresponds to the plane of first major surface **101** under reflection in a plane of first planar reflector **250.** The plane of second planar reflector may be considered a "conjugate plane" with first major surface **101** under reflection in the plane of first planar reflector **250.** The plane of first planar reflector **250** typically also bisects the angle between first major surface **101** and the plane of second planar reflector **271,** although it may be somewhat offset from the line of intersection between those planes, as will be discussed below.

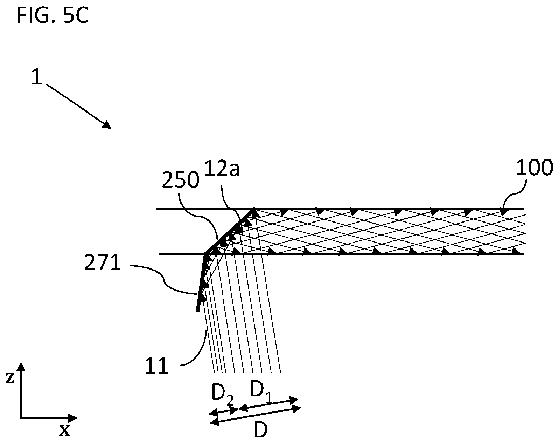

Alignment of the image projector with the coupling-in configuration is chosen such that, for each pixel of the collimated image, light rays **11** corresponding to that pixel passing through a first part **D₁** of the projector exit aperture impinge directly on the first planar reflector **250** and are reflected as rays **12a** to impinge on the first major surface **101** at a first angle of incidence α, as shown in FIG. 5A, and light rays **11** corresponding to that pixel passing through a second part **D₂** of the projector exit aperture impinge on the second planar reflector **271,** are reflected towards the first planar reflector **250** and are reflected from the first planar reflector as rays **12b** to impinge on second major surface **102** at the first angle of incidence α, as shown in FIG. 5B. The combined rays exiting the entire projector exit aperture **D** thus fill the lightguide, as illustrated in FIG. 5C.

At this stage, it will be appreciated that the coupling-in configuration of the present invention provides additional design flexibility, and is particularly conducive, for example, to a glasses form-factor implementation, with deployment of the projector extending outwards from the plane of the lightguide adjacent to or integrated with sides of a glasses frame. The angle β can be chosen according to various design considerations and is typically in the range between 35 degrees and 55 degrees. The corresponding angle of second planar reflector **271** is 70-110 degrees to the major planar surface **101.** In certain cases, it may be preferable to employ a second planar reflector **271** deployed perpendicular to major surface **101,** since this facilitates manufacture, and may avoid the need for a dispersion-correcting wedge prism as will be discussed below. This corresponds to an angle β of 45 degrees for the inclination of first planar reflector **250.**

FIG. 5A shows the trajectory of rays **11** that impinge the coupling-in mirror **250.** As shown, rays **11** are reflected by coupling-in mirror **250** to the descending rays **12a** that are trapped in the substrate by total internal reflection. The figure also shows the full aperture **20** of the waveguide, which is of size 2***h*** (***h*** being the thickness of the waveguide), as explained above, and a virtual ray **12a'** that denotes the trajectory of rays **12a** were they not reflected by major surface **101.** Ray **12a'** indicates the size of the aperture **20** that is filled by mirror **250,** which is given by $h \left(1+\frac{tan α}{tan β}\right) .$

FIG. 5B shows the trajectories of rays **11** which impinge the coupling mirror **271.** Rays **11** are reflected by coupling-in mirror **271** to rays **13,** which impinge on coupling-in mirror **250,** which in turn reflects rays **13** to ascending rays **12b.** The figure also shows the aperture **20,** together with rays **12b',** which represent a mirror image of rays **12b** reflected from **271** and **250** around the major surface **101.** Rays **12b'** indicate the relative portion of the aperture **20** that is being filled by rays **11** impinging mirror **271,** which is given by $h \left(1-\frac{tan α}{tan β}\right) .$

Clearly, the trajectories of rays **11** in FIGS. 5A and 5B together fill the entire aperture **20,** as shown in FIG. 5C.

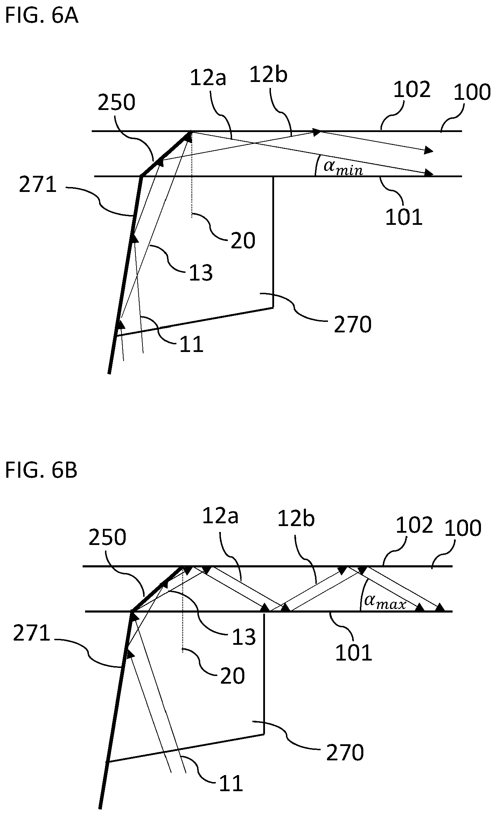

FIGS. 6A and 6B show the trajectories of the extreme fields in optical system **1,** forming an angle *αₘᵢₙ* and *αₘₐₓ* with the major surfaces of waveguide **100.** The entire field of view determines the required illumination of the input aperture of the waveguide. In order to minimize chromatic aberrations, it is advantageous to place a coupling-in prism **270** with an input surface that is perpendicular to the central field illuminated from the projector, as illustrated in FIG. 6C. The prism is bonded to the waveguide **100** using a low refractive index adhesive or alternatively may be mounted with a small air gap from the waveguide **100,** so as to maintain conditions for TIR of coupled-in rays **12a** at major surface **101.** The side surface of prism **270** may be coated to form the second planar reflector **271,** or that function may be provided also by TIR, depending on the range of incident angles to be handled. For clarity of presentation, prism **270** is not shown in all of the drawings. However, it should in most cases be understood to be present except where otherwise stated.

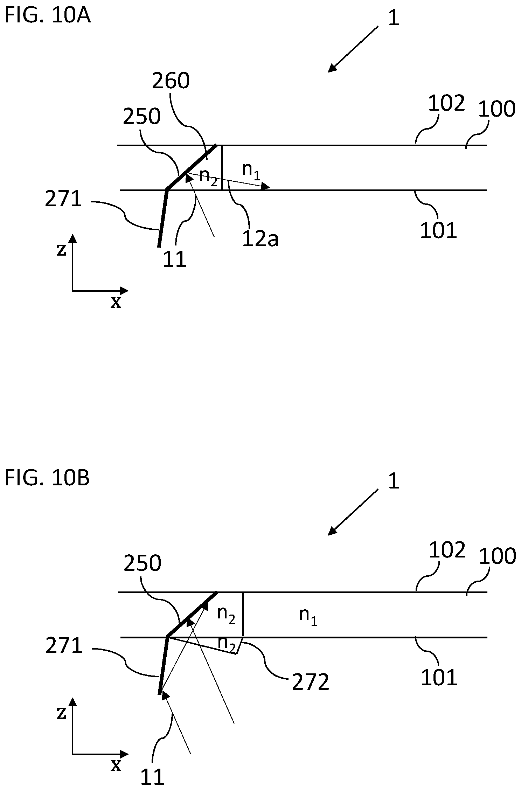

As in FIG. 3D above, the size **D** of the footprint of rays on the input prism **270,** together with the distance from the center of the aperture **20** to the coupling-in surface of the prism **270, *a1*+*****a2**,* determine the required size of the projector. This configuration 'folds' the arrangement of FIGS. 2A-3D, and therefore *a*=*a1*+*a2* and D are given by the same equations as were quoted above. If the material of **270** is different from that of the waveguide's substrate, the coupling-in structure may cause chromatic aberrations and/or misalignment between the coupled-in downward-image **12a** and the upward-image **12b**. A correction wedge prism **272** (discussed further below with reference to FIG. 10B, and which may be composed of several materials - not shown) can compensate for such distortions.

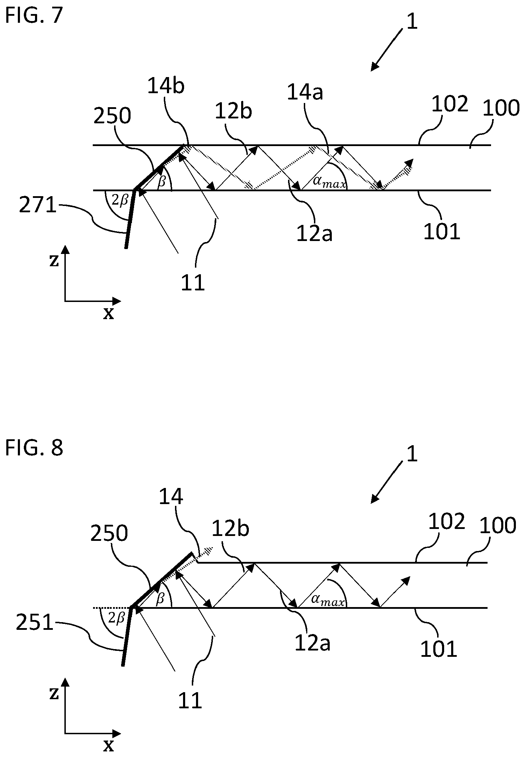

FIGS. 7-9B address certain special cases of ray paths which might lead to ghost images, and how they can be suppressed. Referring to FIG. 7, this illustrates a case in which the angle *αₘₐₓ* of the field with the steepest angle within the waveguide is larger than the elevation angle *β* of the planar reflector **250,** i.e., *αₘₐₓ* > *β.* In this case, an ascending ray **12b** may impinge on reflector **250** and be reflected to a deleterious ray **14,** thereby forming a ghost image, as shown in FIG. 7. This ghost image can be suppressed by implementing reflector **250** so as to slightly protrude from major surface **102** as shown in FIG. 8, thereby forming a cutoff edge which trims the unwanted ray **14.** This solution is at the cost of slightly reduced efficiency, due to the incidental trimming and discarding of some of the image light rays **12b.**

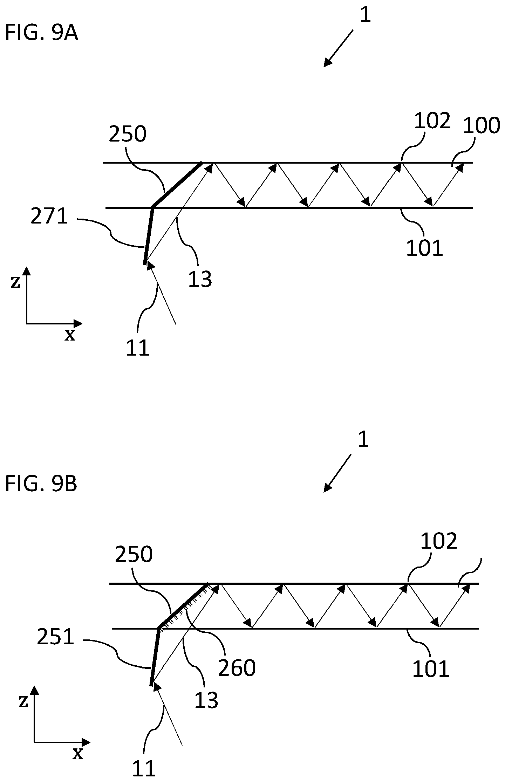

FIG. 9A shows that light rays **11** that impinge the coupling-in mirror **271** may be reflected to rays **13** and coupled into the waveguide if they 'miss' coupling-in mirror **250.** This may cause a ghost image at the output. In an optimally designed system, illumination optics associated with the image source (not described herein in detail) together with the collimating optics achieve "pupil imaging" from an illumination pupil to the entrance to the lightguide **20** through which it should be possible to largely eliminate stray rays such as ray **13** of FIG. 9A. However, if such rays are found to be problematic, the resulting ghost may be eliminated through polarization management, as illustrated with reference to FIG. 9B.

Specifically, to eliminate this ghost, the implementation illustrated in FIG. 9B includes a quarter wave plate **260** that is placed near first planar reflector **250,** thereby rotating the polarization of all rays **13** that are reflected by reflector **250.** If the injected rays are polarized, the polarization of rays **12a, 12b** in the waveguide is orthogonal to the polarization of rays **13** that are coupled into the waveguide. Therefore, the deleterious rays **13** inside the waveguide can be suppressed by placing a polarizer inside the waveguide, or alternatively, by employing polarization-sensitive coatings on the waveguide facets.

In certain preferred implementations of the present invention, coupling prism **270** is formed from material with the same refractive index as lightguide **100,** thereby avoiding issues of chromatic aberrations and image smearing or doubling that can be introduced by an interface between materials with differing refractive indices. However, in certain cases, there may be advantages to the use of higher index materials than are typically used for lightguide **100.** Specifically, ray **11** must penetrate the waveguide, and after being reflected by the coupling-in reflector (mirror) **250,** ray **12a** must be trapped inside the waveguide by TIR. Particularly where prism **270** is bonded to the lightguide using low-index adhesive, a relatively small difference between refractive indices between the material of the lightguide and the low-index adhesive places a strict constraint on the angular orientation of rays **11** and **12,** as well as on the coupling-in reflector **250.** This constraint can be made less limiting if at least the coupling-in region of the waveguide is made from a material having a higher refractive index **n₂**, as shown in FIG. 10A. Using a higher refractive index **n₂** in a prism **260** that is placed below the coupling-in mirror **250,** allows more design flexibility and guiding larger fields of view, for example, maintaining a larger differential between the refractive indices of the prism **260** and low-index adhesive used to attach the coupling prism. Although the entire lightguide **100** could in principle be made from material with refractive index **n₂**, materials with a high refractive index may be expensive and/or heavier than other optical materials and may be more difficult to match where index-matched adhesives are required. For these reasons, it may be preferable to form only the coupling-in region from higher index material and provide a joint at which the remainder of the lightguide switches to lower-index material. To minimize chromatic aberrations and/or misalignment between the coupled-in downward-image **12a** and the upward-image **12b,** the interface between prism **260** and the waveguide substrate is most preferably roughly perpendicular to the major surfaces of the waveguide.

The interface between coupling prism **270** and waveguide **100** or prism **260** may also be a source of chromatic aberration and misalignment between the coupled-in downward-image **12a** and the upward-image **12b** if coupling prism **270** has a different refractive index from the material of waveguide **100** or prism **260** that underlies it. Although the description thus far as referred to the orientation of second planar reflector **271** as being at an angle 2β, it is possible to achieve at least a partial correction for differences in refractive index between the lightguide and the waveguide or coupling prism by changing the orientation so that the plane of reflector **271** is still a reflection of lightguide after taking the differences in refractive index into account. Typically, such a correction is non-optimal as it does not work uniformly for different fields of the image, and it will typically only be sufficient for small FOV displays.

A more comprehensive correction for the mismatch of refractive indices which could cause blurred or doubled images is illustrated in FIG. 10B. In this case, an additional wedge prism **272,** made from the same material as prism **260** (or the waveguide, when no prism **260** is used), is inserted between the coupling prism **272** and first major surface **101** so as to present a front surface that is equally inclined relative to rays **11** and **13.** The angle of the wedge is (90 - 2β) degrees, resulting in the front surface being perpendicular to reflector **271.** In this manner, rays **11** and **13,** which are associated with the same field, undergo the same refractive deflection at the interface between coupling-in prism **270** and wedge prism **272.** As before, low index adhesive or an air gap must be present between wedge prism **260** and the waveguide.

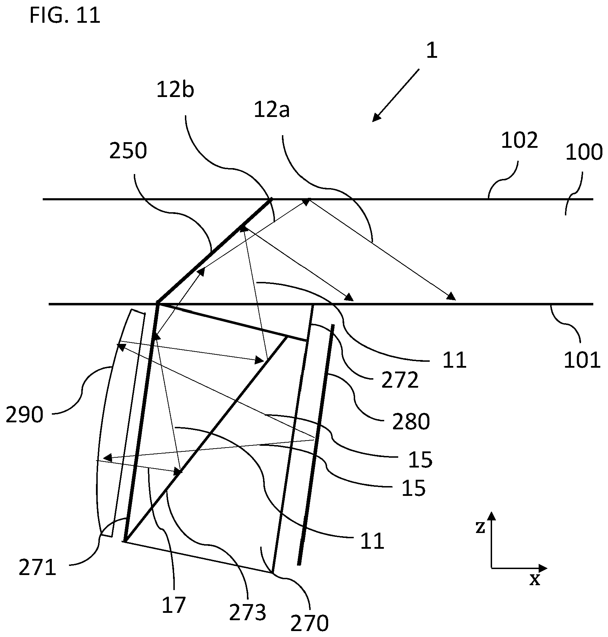

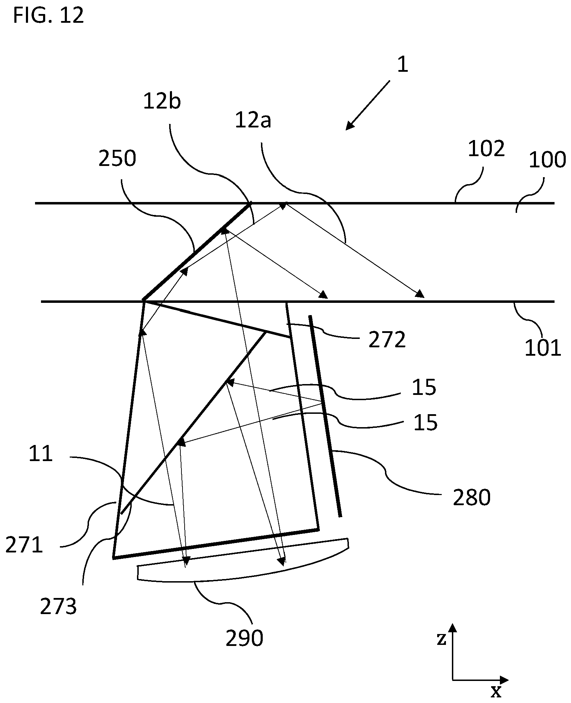

Turning now to FIGS. 11 and 12, in certain particularly advantageous implementations, instead of a separate self-contained image projector juxtaposed to prism **270,** the image projector may be integrated with the prism, preferably by use of a polarizing beam splitter **273** deployed within the prism for directing light from an image plane via reflective collimating optics towards the first and second planar reflectors. This results in a more compact structure.

A first such implementation is illustrated in FIG. 11, where prism **270** includes polarized beam splitter (PBS) **273.** A display device **280,** typically defining an image plane, is placed near one face of the PBS prism **270,** and a collimating lens (reflective collimating optics) **290** is placed on the other side of the PBS prism **270.** In this case, the reflective collimating optics **290** is located behind the second planar reflector **271** so that image light from display device **280** passes through PBS **273** and through second planar reflector **271** to reach the reflective collimating optics **290,** is reflected back through second planar reflector **271,** and is reflected by the polarizing beam splitter **273** at an oblique angle to both the first and second planar reflectors **250** and **271** for coupling in to the lightguide.

The display device may consist of a spatial light modulator (SLM) such as a liquid crystal on Silicon (LCOS) display, a liquid crystal display (LCD), an OLED or micro-LED display or a scanning laser arrangement. According to these different examples, display device **280** may be self-emitting, or it might be illuminated with an external light source, e.g. RGB LEDs, possibly through reflection of polarized light from PBS surface **273.** The reflective collimating optics **290** may be a single lens, doublet or other lens combination including at least one reflective surface. The reflective collimating optics **290** is preferably separated from prism surface/reflector **271** by an air gap or may be bonded thereto with a low refractive index material, to provide the reflectance required at angled relevant to coupling in the image light into the lightguide as described above.

Rays **15** projected from a single pixel on the display device **280** are collimated by optics **290** and oriented as rays **17** after being reflected from **290.** A quarter waveplate is placed between **270** and **290** (not shown), such that the polarization of the light is rotated after being reflected from the collimating lens **290.** In this manner, rays **17** are reflected to rays **11** at the surface **273** for coupling into the waveguide.

FIG. 12 illustrates a variant implementation of optical system **1** which is structurally and functionally similar to FIG. 11. This implementation employs reflection of the image light rays **15** from display device **280** at PBS surface **273** and then, after collimation at reflective collimating optics **290** and rotation of polarization by a quarter waveplate associated with the collimating optics, the collimated rays are transmitted by the PBS surface **273** as rays **11** for coupling into the waveguide.

It will be appreciated that the above descriptions are intended only to serve as examples, and that many other embodiments are possible within the scope of the present invention as defined in the appended claims.

## Claims

1. An optical system comprising:
(a) a lightguide (100) having first and second mutually parallel major surfaces (101, 102) for supporting propagation of image light by internal reflection at said major surfaces, said major surfaces being separated by a thickness (h) of said lightguide, said lightguide including a coupling-out arrangement for coupling out image light from the lightguide towards an eye of an observer;
(b) an image projector (200) for projecting light corresponding to a collimated image through a projector exit aperture (D); and
(c) a coupling-in configuration deployed to couple in the light from said image projector (200) so as to propagate within said lightguide (100), said coupling-in configuration comprising:
(i) a first planar reflector (250) forming an acute angle β with said major surfaces and extending across the thickness of said lightguide,
the optical system being **characterized in that** the coupling-in configuration further comprises
(ii) a second planar reflector (271) associated with said first major surface (101) external to the lightguide (100) and inclined to said first major surface (101) at an angle 2β such that a plane of said second planar reflector (271) corresponds to said first major surface (101) under reflection in a plane of said first planar reflector (250), wherein said image projector (200) is aligned with said coupling-in configuration such that, for each pixel of the collimated image, light rays corresponding to that pixel passing through a first part (D₁) of the projector exit aperture impinge directly on said first planar reflector (250) and are reflected to impinge on said first major surface (101) at a first angle of incidence α and light rays corresponding to that pixel passing through a second part (D₂) of the projector exit aperture impinge on said second planar reflector (271), are reflected towards said first planar reflector (250) and are reflected from said first planar reflector (250) to impinge on said second major surface (102) at said first angle of incidence α.

2. The optical system of claim 1, wherein said second planar reflector is formed at a surface of a prism attached to said first major surface.

3. The optical system of claim 2, wherein said lightguide is formed primarily from a material having a first refractive index and wherein said prism is formed from a material having a second refractive index.

4. The optical system of claim 3, further comprising a compensation wedge formed from material with said first refractive index interposed between said prism and said first major surface.

5. The optical system of claim 3, wherein a portion of said lightguide adjacent to said first planar reflector is formed from a material having said second refractive index, said second refractive index being greater than said first refractive index.

6. The optical system of claim 2, wherein said image projector is integrated with said prism, said image projector comprising a polarizing beam splitter deployed within said prism for directing light from an image plane via reflective collimating optics towards said first and second planar reflectors.

7. The optical system of claim 6, wherein said reflective collimating optics is located behind said second planar reflector and wherein light from the image plane passes through said second planar reflector to reach said reflective collimating optics, is reflected back through said second planar reflector, and is reflected by said polarizing beam splitter at an oblique angle to said second planar reflector for coupling in to said lightguide.

8. The optical system of claim 1, wherein said angle β is between 35 degrees and 55 degrees.

9. The optical system of claim 1, wherein said second planar reflector is perpendicular to said first major surface of said lightguide.

## Patentansprüche

1. Optisches System, umfassend:
(a) einen Lichtleiter (100) mit einer ersten und einer zweiten, zueinander parallelen Hauptfläche (101, 102) zum Unterstützen der Ausbreitung von Bildlicht durch innere Reflexion an den Hauptflächen, wobei die Hauptflächen durch eine Dicke (h) des Lichtleiters voneinander getrennt sind, wobei der Lichtleiter eine Auskoppelanordnung zum Auskoppeln von Bildlicht aus dem Lichtleiter in Richtung eines Auges eines Beobachters umfasst;
(b) einen Bildprojektor (200) zum Projizieren von Licht, das einem kollimierten Bild entspricht, durch eine Projektor-Austrittsapertur (D); und
(c) eine Einkoppelkonfiguration, die angeordnet ist, um das Licht von dem Bildprojektor (200) derart einzukoppeln, dass es sich innerhalb des Lichtleiters (100) ausbreitet, wobei die Einkoppelkonfiguration umfasst:
(i) einen ersten planaren Reflektor (250), der mit den Hauptflächen einen spitzen Winkel β bildet und sich über die Dicke des Lichtleiters erstreckt,
wobei das optische System **dadurch gekennzeichnet ist, dass** die Einkoppelkonfiguration weiterhin umfasst
(ii) einen zweiten planaren Reflektor (271), der der ersten Hauptfläche (101) außerhalb des Lichtleiters (100) zugeordnet und gegenüber der ersten Hauptfläche (101) um einen Winkel 2β geneigt ist, derart, dass eine Ebene des zweiten planaren Reflektors (271) der ersten Hauptfläche (101) bei Spiegelung in einer Ebene des ersten planaren Reflektors (250) entspricht,
wobei der Bildprojektor (200) derart mit der Einkoppelkonfiguration ausgerichtet ist, dass für jedes Pixel des kollimierten Bildes Lichtstrahlen, die diesem Pixel entsprechen und durch einen ersten Teil (D₁) der Projektor-Austrittsapertur hindurchtreten, direkt auf den ersten planaren Reflektor (250) auftreffen und derart reflektiert werden, dass sie unter einem ersten Einfallswinkel α auf die erste Hauptfläche (101) auftreffen, und Lichtstrahlen, die diesem Pixel entsprechen und durch einen zweiten Teil (D₂) der Projektor-Austrittsapertur hindurchtreten, auf den zweiten planaren Reflektor (271) auftreffen, in Richtung des ersten planaren Reflektors (250) reflektiert werden und von dem ersten planaren Reflektor (250) derart reflektiert werden, dass sie unter dem ersten Einfallswinkel α auf die zweite Hauptfläche (102) auftreffen.

2. Optisches System nach Anspruch 1, wobei der zweite planare Reflektor an einer Fläche eines an der ersten Hauptfläche angebrachten Prismas ausgebildet ist.

3. Optisches System nach Anspruch 2, wobei der Lichtleiter überwiegend aus einem Material mit einem ersten Brechungsindex ausgebildet ist und wobei das Prisma aus einem Material mit einem zweiten Brechungsindex ausgebildet ist.

4. Optisches System nach Anspruch 3, weiterhin umfassend einen Kompensationskeil, der aus Material mit dem ersten Brechungsindex ausgebildet und zwischen dem Prisma und der ersten Hauptfläche angeordnet ist.

5. Optisches System nach Anspruch 3, wobei ein Abschnitt des Lichtleiters, der an den ersten planaren Reflektor angrenzt, aus einem Material mit dem zweiten Brechungsindex ausgebildet ist, wobei der zweite Brechungsindex größer als der erste Brechungsindex ist.

6. Optisches System nach Anspruch 2, wobei der Bildprojektor mit dem Prisma integriert ist, wobei der Bildprojektor einen polarisierenden Strahlteiler umfasst, der innerhalb des Prismas angeordnet ist, um Licht von einer Bildebene über eine reflektierende Kollimationsoptik in Richtung des ersten und des zweiten planaren Reflektors zu lenken.

7. Optisches System nach Anspruch 6, wobei die reflektierende Kollimationsoptik hinter dem zweiten planaren Reflektor angeordnet ist und wobei Licht von der Bildebene durch den zweiten planaren Reflektor hindurchtritt, um die reflektierende Kollimationsoptik zu erreichen, zurück durch den zweiten planaren Reflektor reflektiert wird und von dem polarisierenden Strahlteiler unter einem schrägen Winkel zu dem zweiten planaren Reflektor zum Einkoppeln in den Lichtleiter reflektiert wird.

8. Optisches System nach Anspruch 1, wobei der Winkel β zwischen 35 Grad und 55 Grad liegt.

9. Optisches System nach Anspruch 1, wobei der zweite planare Reflektor senkrecht zu der ersten Hauptfläche des Lichtleiters ist.

## Revendications

1. Système optique comprenant :
(a) un guide de lumière (100) présentant des première et seconde surfaces principales mutuellement parallèles (101, 102) destinées à permettre la propagation de la lumière d'image par réflexion interne sur lesdites surfaces principales, lesdites surfaces principales étant séparées par une épaisseur (h) dudit guide de lumière, ledit guide de lumière comprenant un agencement de couplage en sortie destiné à découpler la lumière d'image hors du guide de lumière en direction d'un œil d'un observateur ;
(b) un projecteur d'image (200) destiné à projeter de la lumière correspondant à une image collimatée à travers une ouverture de sortie de projecteur (D) ; et
(c) une configuration de couplage en entrée déployée pour coupler en entrée la lumière provenant dudit projecteur d'image (200) de manière à se propager à l'intérieur dudit guide de lumière (100), ladite configuration de couplage en entrée comprenant :
(i) un premier réflecteur plan (250) formant un angle aigu β avec lesdites surfaces principales et s'étendant sur toute l'épaisseur dudit guide de lumière,
le système optique étant **caractérisé en ce que** la configuration de couplage en entrée comprend en outre
(ii) un second réflecteur plan (271) associé à ladite première surface principale (101) à l'extérieur du guide de lumière (100) et incliné par rapport à ladite première surface principale (101) d'un angle 2β de telle sorte qu'un plan dudit second réflecteur plan (271) correspond à ladite première surface principale (101) par réflexion dans un plan dudit premier réflecteur plan (250),
dans lequel ledit projecteur d'image (200) est aligné avec ladite configuration de couplage en entrée de telle sorte que, pour chaque pixel de l'image collimatée, des rayons lumineux correspondant à ce pixel et passant à travers une première partie (D₁) de l'ouverture de sortie du projecteur frappent directement ledit premier réflecteur plan (250) et sont réfléchis pour frapper ladite première surface principale (101) sous un premier angle d'incidence α, et des rayons lumineux correspondant à ce pixel et passant à travers une seconde partie (D₂) de l'ouverture de sortie du projecteur frappent ledit second réflecteur plan (271), sont réfléchis vers ledit premier réflecteur plan (250) et sont réfléchis par ledit premier réflecteur plan (250) pour frapper ladite seconde surface principale (102) sous ledit premier angle d'incidence α.

2. Système optique selon la revendication 1, dans lequel ledit second réflecteur plan est formé sur une surface d'un prisme fixé à ladite première surface principale.

3. Système optique selon la revendication 2, dans lequel ledit guide de lumière est formé principalement d'un matériau présentant un premier indice de réfraction et dans lequel ledit prisme est formé d'un matériau présentant un second indice de réfraction.

4. Système optique selon la revendication 3, comprenant en outre un coin de compensation formé d'un matériau présentant ledit premier indice de réfraction, interposé entre ledit prisme et ladite première surface principale.

5. Système optique selon la revendication 3, dans lequel une portion dudit guide de lumière adjacente audit premier réflecteur plan est formée d'un matériau présentant ledit second indice de réfraction, ledit second indice de réfraction étant supérieur audit premier indice de réfraction.

6. Système optique selon la revendication 2, dans lequel ledit projecteur d'image est intégré audit prisme, ledit projecteur d'image comprenant un séparateur de faisceau polarisant déployé à l'intérieur dudit prisme pour diriger la lumière provenant d'un plan image, par l'intermédiaire d'une optique de collimation réfléchissante, vers lesdits premier et second réflecteurs plans.

7. Système optique selon la revendication 6, dans lequel ladite optique de collimation réfléchissante est située derrière ledit second réflecteur plan et dans lequel la lumière provenant du plan image traverse ledit second réflecteur plan pour atteindre ladite optique de collimation réfléchissante, est réfléchie en retour à travers ledit second réflecteur plan, et est réfléchie par ledit séparateur de faisceau polarisant sous un angle oblique par rapport audit second réflecteur plan en vue du couplage en entrée dans ledit guide de lumière.

8. Système optique selon la revendication 1, dans lequel ledit angle β est compris entre 35 degrés et 55 degrés.

9. Système optique selon la revendication 1, dans lequel ledit second réflecteur plan est perpendiculaire à ladite première surface principale dudit guide de lumière.
